# EUROPÄISCHE PATENTSCHRIFT

(11) **EP 3 795 736 B1**
(45) Veröffentlichungstag und Bekanntmachung des Hinweises auf die Patenterteilung: **10.01.2024**
(21) Anmeldenummer: 20191063.5
(22) Anmeldetag: 14.08.2020
(51) Int. Cl.: D06F 58/06, F16C 13/04, F16C 13/00, F16C 35/077, F16C 19/06

(54) **ROLLKÖRPER FÜR EINE LAGERROLLE, LAGERROLLE MIT EINEM SOLCHEN UND WÄSCHEBEHANDLUNGSGERÄT MIT EINER SOLCHEN**
ROLLING BODY FOR A BEARING ROLLER, BEARING ROLLER WITH SUCH A ROLLING BODY AND LAUNDRY TREATMENT DEVICE USING THE SAME
CORPS ROULANT POUR UN GALET DE ROULEMENT, GALET DE ROULEMENT DOTÉ D'UN TEL CORPS ROULANT ET APPAREIL DE TRAITEMENT DU LINGE DOTÉ D'UN TEL GALET DE ROULEMENT

(30) Priorität: 23.09.2019 DE 102019214421
(43) Veröffentlichungstag der Anmeldung: 24.03.2021
(73) Patentinhaber: BSH Hausgeräte GmbH, 81739 München (DE)
(72) Erfinder: Ben Kmicha, Helmi, 10969 Berlin (DE); Ediger, Rainer, 12351 Berlin (DE); Fritsch, Gregor, 14621 Schönwalde-Glien (DE); Werner, Marcel, 12683 Berlin (DE)

(56) Entgegenhaltungen:
- EP-A1- 3 470 568
- WO-A1-2009/061325
- DE-A1-102011 001 948

## Beschreibung

Die Erfindung betrifft einen Rollkörper für eine Lagerrolle zum Führen und/oder Abstützen eines vorderseitigen oder rückseitigen Abschnitts einer Wäschetrommel eines als Frontlader ausgebildeten Wäschebehandlungsgeräts, aufweisend wenigstens einen in Kontakt mit der Wäschetrommel bringbaren Reifen und wenigstens eine radial innenliegend zu dem Reifen angeordnete Felge. Des Weiteren betrifft die Erfindung eine Lagerrolle zum Führen und/oder Abstützen eines vorderseitigen oder rückseitigen Abschnitts einer Wäschetrommel eines als Frontlader ausgebildeten Wäschebehandlungsgeräts, aufweisend wenigstens ein Radialwälzlager und wenigstens einen das Radialwälzlager zumindest teilweise radial außen umschließenden, mit dem Radialwälzlager verbundenen Rollkörper. Ferner betrifft die Erfindung ein Wäschebehandlungsgerät mit einer um eine waagerechte Achse drehbar gelagerten Wäschetrommel.

EP 1 529 874 A1 offenbart einen Rollkörper für eine Lagerrolle zum Führen und/oder Abstützen eines vorderseitigen Abschnitts einer um eine waagerechte Achse drehbar gelagerten Wäschetrommel eines Haushaltsgeräts zum Trocknen von Wäsche. Der Rollkörper weist eine an einer Außenmantelfläche des Rollkörpers angeordnete, in Kontakt mit der Wäschetrommel bringbare Rollfläche und einen unmittelbar an die Rollfläche angrenzenden, ringförmig ausgebildeten Rollabschnitt mit einer axial offenen Hohlkammerstruktur auf. Ferner weist der Rollkörper einen radial innenliegend zu dem Rollabschnitt angeordneten, mit dem Rollabschnitt verbundenen, ringförmig ausgebildeten Stützabschnitt auf.

DE 10 2011 001 948 A1 offenbart ein Wäsche-Behandlungsgerät mit einem Gehäuse, das einen Innenraum umschließt, einer Trommel, die im Innenraum angeordnet und um eine Rotationsachse drehbar ist, einem Motor, der betrieblich mit der Trommel gekoppelt ist, um diese um die Rotationsachse zu drehen, und einer Rollenanordnung, die eine Außenfläche der Trommel abstützt. Die Rollenanordnung weist eine Achse, ein Rad mit einer Nabe, die eine Achsöffnung umschließt, die die Achse zur Drehung derselben relativ zur Nabe aufnimmt, einen Reifen, der mit dem Rad verbunden ist und mit einer Außenfläche mit der Trommel in Berührung steht, und ein Schmierstoff-Reservoir auf, das in der Nabe ausgebildet ist und einen Auslass aufweist, der in Fließverbindung mit der Achsöffnung steht derart, dass mindestens ein Teil eines im Behälter enthaltenen Schmiermittels aus dem Auslass austreten und die Achse schmieren kann.

EP 3 470 568 A1 offenbart einen Trockner mit einem Gehäuse, einer innerhalb des Gehäuses um eine erste Drehachse drehbar gelagerten Trommel zur Aufnahme von Wäschestücken, wobei die Trommel während des Betriebs des Trockners mit mindestens zwei Rollenvorrichtungen in Kontakt steht, und einer Sicherungsvorrichtung zum Schutz vor einer Beschädigung bei Stößen auf den Trockner. Die Sicherungsvorrichtung ist ausgestaltet, um zumindest in einem Transportzustand des Trockners im Kontakt mit der Rollenvorrichtung zu stehen.

WO 2009 / 061 325 A1 offenbart eine Stützrolle für ein Wäschebehandlungsgerät. Die Stützrolle weist eine Nabe, einen Ring, der konzentrisch um die Nabe angeordnet ist, ein erstes thermoplastisches Elastomer, das zwischen der Nabe und dem Ring angeordnet ist, und ein zweites thermoplastisches Elastomer, das um den Ring angeordnet ist, auf.

Die Gestaltung einer Lagerrolle beeinflusst maßgeblich die Positionierung einer Wäschetrommel innerhalb eines Wäschetrockners und die Einleitung von im Betrieb des Wäschetrockners auftretenden Lagerkräften in einen mit einer Lagerrolle zusammenwirkenden Abrollbereich an der Außenmantelfläche der Wäschetrommel. Zudem muss eine Lagerrolle verschiedenen Anforderungen gerecht werden. Beispielsweise werden im Betrieb eines Wäschetrockners aufgrund wechselnder Beanspruchungen der Wäschetrommel und durch das Abstützen der jeweiligen Trommellast über Kontaktflächen auf den Lagerrollen Druckspannungen in einen Abrollbereich der Wäschetrommel im stetigen Wechsel erzeugt, die bis hin zu einem Versagen des Trommelmaterials führen und folglich die Betriebsfestigkeit der Wäschetrommel beeinträchtigen können. Daraus ergibt sich für die Auslegung von Lagerrollen die Anforderung, dass die Betriebsfestigkeit der Wäschetrommel zu gewährleisten ist.

Des Weiteren ergibt sich eine Anforderung an die Lagerrollen bezüglich der Positionierung der Wäschetrommel innerhalb eines Wäschetrockners. Besonders eine geeignete axiale Positionierung der Wäschetrommel innerhalb des Wäschetrockners ist für eine optimale Kompression einer Lagerschilddichtung erforderlich. Aus einer starken Kompression der Lagerschilddichtung folgt zwar eine gute Dichtwirkung jedoch auch eine hohe Reaktionskraft aufgrund von Reibung, was wiederum mit einer Erhöhung des zum Antreiben der Wäschetrommel benötigten Antriebsmoments verbunden ist. Eine zu schwache Kompression der Lagerschilddichtung kann beispielsweise zu einer Leckage und somit zu einem schlechten Kondensationswirkungsgrad eines als Kondensationstrockner ausgebildeten Wäschetrockners führen.

Auch der Rollwiderstand einer Lagerrolle beeinflusst das von einem Antrieb aufzubringende Antriebsmoment und somit die Effizienz eines Wäschetrockners, aber auch dessen Betriebsgeräusch. Nach längerem Stillstand kommt es am Rollenmaterial außerdem zu Retardationserscheinungen, die für einen hörbar unrunden Lauf der Lagerrollen zum Betriebsbeginn verantwortlich sind. Weitere Anforderungen müssen von einer Lagerrolle außerhalb des Gerätebetriebs erfüllt werden. Beispielsweise muss eine Lagerrolle widerstandsfähig gegen verschiedene Lastfälle sein, die bei einem Transport und einem Verladen von verpackten Haushaltsgeräten auftreten können.

Eine herkömmliche Lagerrolle weist ein Radialwälzlager, eine Felge und einen Reifen auf. Das Radialwälzlager wird in der Regel mit der Felgengeometrie umspritzt oder in die Felge eingepresst. Die Felge wird entweder mit der Reifengeometrie umspritzt, oder die Felge wird mit dem Reifen in einem 2-Komponenten-Verfahren verbunden. Letzteres ist nur bei einer guten Haftungskompatibilität zwischen dem Felgenwerkstoff und dem Reifenwerkstoff möglich. Die Felge kann gelocht sein oder Speichen aufweisen. Der Reifen kann formschlüssig und kraftschlüssig mit der Felge verbunden sein.

Die Geometrie und der Werkstoff des Reifens beeinflussen maßgeblich den Rollwiderstand und das Abrollgeräusch einer herkömmlichen Lagerrolle. Durch eine elastische Verformung des Reifens entsteht eine Kontaktfläche zwischen dem Reifen und dem Abrollbereich der Wäschetrommel, wodurch im Betrieb eines Wäschetrockners in der Wäschetrommel auftretende mechanische Spannungen reduziert werden. Der Reifen gewährleistet somit die oben genannte Anforderung an eine Lagerrolle bezüglich der Betriebsfestigkeit der Wäschetrommel und trägt zudem zur optimalen, insbesondere axialen, Trommelpositionierung bei. Zudem ist der Druckverformungsrest des Reifenwerkstoffs ausschlaggebend für das Anlaufverhalten der Lagerrolle. Die Felge besteht hingegen aus einem sehr verformungssteifen Werkstoff, verbindet den Reifen mit dem Radialwälzlager und sorgt für eine formstabile Kraftübertragung von dem Reifen auf das Radialwälzlager. Aufgrund eines verhältnismäßig niedrigen Werkstoffpreises kann die Felge außerdem als "Füllgeometrie" zwischen einem Lageraußendurchmesser und einem gewünschten Rollenaußendurchmesser dienen.

Es gibt Lagerrollen ohne Felge, bei denen das Wälzlager direkt mit dem Reifen verbunden ist, wobei hierzu meist größere Wälzlager verwendet werden, die teurer sind und somit kostenintensiver als eine Lagerrollenvariante mit Felge sind. Eine Verbindung zwischen dem Reifen und dem Wälzlager erfolgt in den meisten Fällen nur kraftschlüssig und eventuell zusätzlich chemisch bzw. stoffschlüssig.

Aufgabe der Erfindung ist es, eine kostengünstig und platzsparender ausgebildete Lagerrolle bereitzustellen.

Diese Aufgabe wird durch den unabhängigen Patentanspruch gelöst. Vorteilhafte Ausgestaltungen sind in der nachfolgenden Beschreibung, den abhängigen Patentansprüchen und den Figuren wiedergegeben, wobei diese Ausgestaltungen jeweils für sich genommen oder in verschiedener Kombination von wenigstens zwei dieser Ausgestaltungen miteinander einen weiterbildenden, insbesondere auch bevorzugten oder vorteilhaften, Aspekt der Erfindung darstellen können.

Ein erfindungsgemäßer Rollkörper für eine Lagerrolle zum Führen und/oder Abstützen eines vorderseitigen oder rückseitigen Abschnitts einer Wäschetrommel eines als Frontlader ausgebildeten Wäschebehandlungsgeräts weist wenigstens einen in Kontakt mit der Wäschetrommel bringbaren Reifen und wenigstens eine radial innenliegend zu dem Reifen angeordnete Felge auf, wobei zwischen dem Reifen und der Felge wenigstens ein in Umfangsrichtung wirkender Formschluss ausgebildet ist, wozu an einer dem Reifen zugewandten Außenmantelfläche der Felge wenigstens ein radial abstehender Verbindungsvorsprung angeordnet ist, der formschlüssig in eine Verbindungsaussparung an einer der Felge zugewandten Innenmantelfläche des Reifens eingreift.

Der Reifen des erfindungsgemäßen Rollkörpers ist über die Felge desselben an einem Radialwälzlager anordbar, so dass das Radialwälzlager klein bzw. kleiner ausgebildet ist als bei einer herkömmlichen Lagerrolle, bei der der Reifen unmittelbar mit dem Radialwälzlager verbunden ist. Da die Kosten für die Felge deutlich geringer sind als diejenigen für ein Radialwälzlager, kann insgesamt eine Lagerrolle kostengünstiger hergestellt werden.

Durch den Formschluss zwischen der Felge und dem Reifen kann eine Kerbwirkung innerhalb des Rollkörpers, insbesondere innerhalb der Felge, reduziert werden. Zudem weist der erfindungsgemäße Rollkörper durch eine geeignete Kombination aus einer geringeren Reifenhärte und einem größeren Abstand zwischen der Felge und der Lauffläche des Reifens gute Schallabsorptionseigenschaften auf. Hierzu kann eine Dicke des Reifens beispielsweise in einem Bereich von 2,5 mal bis 3 mal der Dicke der Felge liegen.

Der Reifen kann teilweise oder vollständig aus einem Kunststoff, insbesondere einem Elastomer, hergestellt sein. Der Reifen kann durch Spritzgießen hergestellt sein. Zur Herstellung des Rollkörpers kann die Felge mit dem Werkstoff des Reifens umspritzt werden. Der Reifen weist radial außen eine Lauffläche auf, mit der der Rollkörper an einem Abschnitt einer Wäschetrommel abrollen kann. Die Lauffläche kann bezüglich einer senkrecht auf einer Drehachse des Rollkörpers angeordneten, gedachten Achse eben oder konvex gewölbt ausgebildet sein.

Die Felge kann teilweise oder vollständig aus einem faserhaltigen oder faserfreien Kunststoff, insbesondere einem Thermoplasten oder Duroplasten, hergestellt sein. Die Felge kann durch Spritzgießen hergestellt sein. Die Felge kann massiv und ohne Durchbrechungen ausgebildet sein, um höheren Lasten standhalten zu können. Zur Herstellung einer Lagerrolle kann ein Radialwälzlager mit dem Werkstoff der Felge umspritzt werden.

Die Erfindung macht es insbesondere möglich, eine Lagerrolle mit kleinerem Außendurchmesser herzustellen und in einem Wäschebehandlungsgerät zu verwenden. Hierbei ist eine Herausforderung die starke Eigenerwärmung einer solchen kleineren Lagerrolle im Betrieb des Wäschebehandlungsgeräts aufgrund der erhöhten Walkarbeit an dem Reifen durch die deutlich höhere Drehzahl der kleineren Lagerrolle. Beispielsweise kann sich eine kleinere Lagerrolle mit einem Außendurchmesser von 45 mm bei einer Trommeldrehzahl von 52 U/min mit 672 U/min drehen, während sich eine herkömmliche Lagerrolle mit einem Außendurchmesser von 76 mm unter denselben Bedingungen lediglich mit 343 U/min dreht. Wird die Lagerrolle zudem zum Führen und/oder Abstützen der Wäschetrommel im Bereich einer schmalen vorderseitigen oder rückseitigen Trommelfalz verwendet, tritt eine deutlich stärkere Flächenpressung an der Lagerrolle auf. Um optimale Betriebseigenschaften zu realisieren, sollte die Lagerrolle so hart wie möglich sein, damit das Walken und die Eigenerwärmung der Lagerrolle so gering wie möglich sind. Auf der anderen Seite sollte die Lagerrolle aber auch weich genug sein, damit Schwingungen, die zu Geräuschen führen, bestmöglich von der Lagerrolle absorbiert werden.

Der Einsatz des erfindungsgemäßen Rollkörpers bzw. einer damit ausgestatten Lagerrolle ist insbesondere von Vorteil bei einem Wäschebehandlungsgerät in Form einer Waschmaschine oder eines Wäschetrockners, das mit einer Wäschebeladung von mindestens 10 kg betrieben werden kann und das zudem eine axial verlängerte Wäschetrommel aufweisen kann, da in einem solchen Fall weniger Bauraum innerhalb des Wäschebehandlungsgeräts zur Verfügung steht, was die Verwendung von kleineren Lagerrollen mit reduziertem Außendurchmesser, beispielsweise von 45 mm, erfordert.

Die Verbindungsaussparung kann beispielsweise als Kerbe ausgebildet sein. Eine Tiefe der Verbindungsaussparung kann beispielsweise in einem Bereich von 10 % bis 20 % der Dicke des Reifens liegen.

Gemäß einer vorteilhaften Ausgestaltung ist der Verbindungsvorsprung als axial verlaufende Rippe ausgebildet, die axial zentriert zu der Felge angeordnet ist und deren Länge kürzer als eine Breite der Felge ist, wobei die Verbindungsaussparung als axial verlaufende Nut ausgebildet ist, die axial zentriert zu dem Reifen angeordnet ist und deren Länge kürzer als eine Breite des Reifens ist. Hierdurch ist der Formschluss zwischen dem Reifen und der Felge in einer Mittelebene des Rollkörpers am stärksten ausgebildet.

Gemäß einer weiteren vorteilhaften Ausgestaltung beträgt eine Dicke des Reifens im Bereich der Verbindungsaussparung wenigstens 7,5 mm und die Dicke des Reifens außerhalb des Bereichs der Verbindungsaussparung wenigstens 9 mm. Diese Ausgestaltung kann beispielsweise bei einem Rollkörper mit einem Außendurchmesser von 45 mm realisiert sein.

Gemäß einer weiteren vorteilhaften Ausgestaltung beträgt eine Höhe des Verbindungsvorsprungs 1,5 mm. Entsprechend kann eine Tiefe der Verbindungaussparung 1,5 mm betragen.

Gemäß einer weiteren vorteilhaften Ausgestaltung sind an der Außenmantelfläche der Felge mehrere Verbindungsvorsprünge umfangsversetzt zueinander angeordnet sind und an der Innenmantelfläche des Reifens eine entsprechende Anzahl an Verbindungsaussparungen entsprechend umfangsversetzt zueinander ausgebildet. Hierdurch wird der Formschluss zwischen der Felge und dem Reifen verstärkt. Die Anzahl von Verbindungsvorsprüngen kann gerade oder ungerade sein. Die Anzahl von Verbindungsvorsprüngen kann unter Berücksichtigung einer Eigenfrequenzanalyse des Rollkörpers ausgewählt werden, um die Schallemissionen des Rollkörpers weiter zu reduzieren.

Gemäß einer weiteren vorteilhaften Ausgestaltung ist die Felge zumindest teilweise aus faserverstärktem Polybutylenterephthalat hergestellt. Hierdurch wird der Felge eine gewünschte Formsteifigkeit verliehen. Durch die Wahl eines geeigneten Kunststoffs zur Herstellung der Felge kann die Felge unter Verwendung eines Spritzgießverfahrens auf einfache Art und Weise hergestellt werden
Gemäß einer weiteren vorteilhaften Ausgestaltung ist der Reifen zumindest teilweise Polyurethan hergestellt. Der Reifen kann beispielsweise aus einem thermoplastischen Polyurethan-Elastomer hergestellt sein, der einen hohen Widerstand gegenüber Zug- und Druckbelastungen aufweist. Durch die Wahl eines geeigneten Kunststoffs zur Herstellung des Reifens kann der Reifen unter Verwendung eines Spritzgießverfahrens auf einfache Art und Weise hergestellt werden.

Gemäß einer weiteren vorteilhaften Ausgestaltung weist der Reifen eine Shore-Härte von 85 Shore-A auf. Hierdurch können Retardationserscheinungen vermieden und somit das Anlaufverhalten des Rollkörpers für den jeweiligen Anwendungsfall optimal gehalten werden.

Gemäß einer weiteren vorteilhaften Ausgestaltung ist der Reifen stoffschlüssig mit der Felge verbunden. Die stoffschlüssige bzw. chemische Verbindung zwischen dem Reifen und der Felge kann beispielsweise beim Umspritzen der Felge mit dem Werkstoff des Reifens gebildet werden.

Eine erfindungsgemäße Lagerrolle zum Führen und/oder Abstützen eines vorderseitigen oder rückseitigen Abschnitts einer Wäschetrommel eines als Frontlader ausgebildeten Wäschebehandlungsgeräts weist wenigstens ein Radialwälzlager und wenigstens einen das Radialwälzlager zumindest teilweise radial außen umschließenden, mit dem Radialwälzlager verbundenen Rollkörper auf, wobei der Rollkörper gemäß einer der oben genannten Ausgestaltungen oder einer Kombination von wenigstens zwei dieser Ausgestaltungen miteinander ausgebildet ist.

Mit der Lagerrolle sind die oben mit Bezug auf den Rollkörper genannten Vorteile entsprechend verbunden. Das Radialwälzlager kann in den Rollkörper bzw. dessen Felge nach Herstellung des Rollkörpers bzw. der Felge eingepresst oder mit dem Werkstoff der Felge umspritzt werden.

Ein erfindungsgemäßes Wäschebehandlungsgerät weist eine um eine waagerechte Achse drehbar gelagerte Wäschetrommel und wenigstens eine Lagerrolle gemäß einer der oben genannten Ausgestaltungen oder einer Kombination von wenigstens zwei dieser Ausgestaltungen miteinander auf, mit der ein vorderseitiger oder rückseitiger Abschnitt der Wäschetrommel geführt und/oder abgestützt ist.

Mit dem Wäschebehandlungsgerät sind die oben mit Bezug auf den Rollkörper bzw. die Lagerrolle genannten Vorteile entsprechend verbunden. Die Lagerrolle kann drehbar an einer parallel zur Drehachse der Wäschetrommel ausgerichteten Achse angeordnet sein, die an einem vorderseitigen Lagerschild des Wäschebehandlungsgeräts befestigbar sein kann. Das Wäschebehandlungsgerät kann wenigstens zwei in einem Vorderbereich des Wäschebehandlungsgeräts angeordnete Lagerrollen aufweisen, über die der vorderseitige Abschnitt der Wäschetrommel geführt bzw. von unten abgestützt ist. Alternativ oder zusätzlich kann das Wäschebehandlungsgerät wenigstens zwei in einem rückseitigen Bereich des Wäschebehandlungsgerät angeordnete Lagerrollen aufweisen, über die ein rückseitiger Abschnitt der Wäschetrommel geführt bzw. von unten abgestützt ist. Die Lagerrollen sind vorzugsweise unterhalb einer Horizontalebene angeordnet, durch welche die Drehachse der Wäschetrommel verläuft. Das Wäschebehandlungsgerät kann aber auch wenigstens eine in einem oberhalb dieser Horizontalebene liegenden Bereich des Wäschebehandlungsgeräts angeordnete zusätzliche Lagerrolle aufweisen, die insbesondere der Führung der Wäschetrommel dient. Das Wäschebehandlungsgerät kann beispielsweise als Waschmaschine, Wäschetrockner, insbesondere Kondensationstrockner, Waschtrockner oder dergleichen ausgebildet sein. Die Wäschetrommel des Wäschebehandlungsgeräts ist um eine Achse drehbar, die im Rahmen der Erfindung auch geringfügig von einer exakt waagerechten Anordnung abweichen kann, was jedoch mit schlechteren Betriebseigenschaften des Wäschebehandlungsgeräts einhergehen kann.

Gemäß einer vorteilhaften Ausgestaltung ist die Lagerrolle derart relativ zu der Wäschetrommel angeordnet, dass die Lagerrolle die Wäschetrommel im Bereich einer vorderseitigen oder rückseitigen Trommelfalz der Wäschetrommel führt und/oder abstützt. Alternativ kann die Lagerrolle derart relativ zu der Wäschetrommel angeordnet sein, dass die Lagerrolle die Wäschetrommel im Bereich eines vorderseitigen Stirnbodens der Wäschetrommel führt und/oder abstützt.

Die Erfindung ist nicht auf die angegebene Kombination der Merkmale des unabhängigen Anspruchs und der abhängigen Ansprüche beschränkt. Es ergeben sich darüber hinaus weitere Möglichkeiten, einzelne Merkmale, insbesondere dann, wenn sie sich aus den Ansprüchen, der nachfolgenden Beschreibung des Ausführungsbeispiels oder unmittelbar aus den Figuren ergeben, miteinander zu kombinieren. Außerdem soll die Bezugnahme der Ansprüche auf die Figuren durch die Verwendung von Bezugszeichen den Schutzumfang der Ansprüche auf keinen Fall auf das dargestellte Ausgestaltungsbeispiel beschränken.

Im Folgenden wird die Erfindung unter Bezugnahme auf die anliegenden Figuren anhand von eines bevorzugten Ausführungsbeispiels exemplarisch erläutert, wobei die nachfolgend dargestellten Merkmale sowohl jeweils für sich genommen als auch in unterschiedlicher Kombination miteinander einen vorteilhaften oder weiterbildenden Aspekt der Erfindung darstellen können. Es zeigen
- Fig. 1: eine schematische Seitenansicht eines Ausführungsbeispiels für eine erfindungsgemäße Lagerrolle,
- Fig. 2: eine schematische und perspektivische Explosionsdarstellung der in Fig. 1 gezeigten Lagerrolle,
- Fig. 3: eine schematische Seitenansicht der in den Fign. 1 und 2 gezeigten Felge und
- Fig. 4: eine schematische Schnittdarstellung der in Fig. 1 gezeigten Lagerrolle entlang der Schnittebene IV-IV aus Fig. 1.

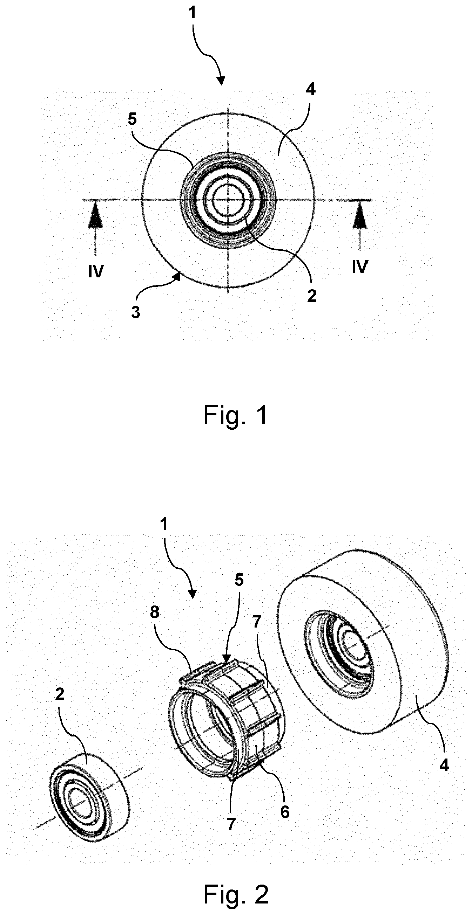

Fig. 1 zeigt eine schematische Seitenansicht eines Ausführungsbeispiels für eine erfindungsgemäße Lagerrolle 1 zum Führen und/oder Abstützen eines nicht gezeigten vorderseitigen oder rückseitigen Abschnitts einer nicht gezeigten Wäschetrommel eines als Frontlader ausgebildeten, nicht gezeigten Wäschebehandlungsgeräts.

Die Lagerrolle 1 weist ein Radialwälzlager 2 und einen das Radialwälzlager 2 radial au-βen umschließenden, mit dem Radialwälzlager 2 verbundenen Rollkörper 3 auf.

Der Rollkörper 3 weist einen in Kontakt mit der Wäschetrommel bringbaren Reifen 4 auf. Der Reifen 4 kann aus Polyurethan hergestellt sein. Der Reifen 4 kann eine Shore-Härte von 85 Shore-A aufweisen.

Zudem weist der Rollkörper 3 eine radial innenliegend zu dem Reifen 4 angeordnete Felge 5 auf. Die Felge 5 kann aus faserverstärktem Polybutylenterephthalat hergestellt sein.

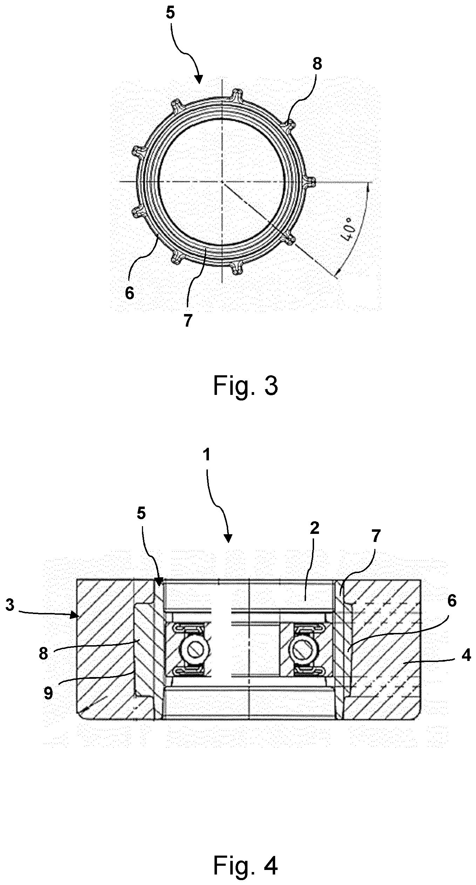

Zwischen dem Reifen 4 und der Felge 5 ist ein in Umfangsrichtung wirkender Formschluss ausgebildet. Hierzu sind an einer dem Reifen 4 zugewandten Außenmantelfläche der Felge 5 neun in den Fign. 2 bis 4 gezeigte Verbindungsvorsprünge umfangsversetzt zueinander angeordnet sind und an einer der Felge 5 zugewandten Innenmantelfläche des Reifens 4 eine entsprechende Anzahl an in Fig. 4 gezeigten Verbindungsaussparungen entsprechend umfangsversetzt zueinander ausgebildet, wobei jeweils ein einziger Verbindungsvorsprung formschlüssig in jeweils eine einzige Verbindungsaussparung eingreift. Zusätzlich ist der Reifen 4 stoffschlüssig mit der Felge 5 verbunden.

Der jeweilige Verbindungsvorsprung ist als axial verlaufende Rippe ausgebildet, die axial zentriert zu der Felge 5 angeordnet ist und deren Länge kürzer als eine Breite der Felge 5 ist, wie es in den Fign. 2 und 4 gezeigt ist. Zudem ist die jeweilige Verbindungsaussparung als axial verlaufende Nut ausgebildet, die axial zentriert zu dem Reifen 4 angeordnet ist und deren Länge kürzer als eine Breite des Reifens 4 ist, wie es in Fig. 4 gezeigt ist.

Eine Dicke des Reifens 4 im Bereich der jeweiligen Verbindungsaussparung beträgt 7,5 mm. Die Dicke des Reifens 4 außerhalb des Bereichs der jeweiligen Verbindungsaussparung beträgt 9 mm. Eine Höhe des jeweiligen Verbindungsvorsprungs beträgt 1,5 mm.

Fig. 2 zeigt eine schematische und perspektivische Explosionsdarstellung der in Fig. 1 gezeigten Lagerrolle 1. Es ist insbesondere der Aufbau der Felge 5 zu erkennen. Die Felge 5 weist einen Mittelabschnitt 6 mit vergrößerter Materialstärke und sich auf beiden Seiten axial daran anschließende Randabschnitte 7 mit verringerter Materialstärke auf. An dem Mittelabschnitt 6 sind radial außen die rippenförmigen Verbindungsvorsprünge 8 ausgebildet, die gleichmäßig umfangsversetzt zueinander angeordnet. Der jeweilige Verbindungsvorsprung 8 ist als axial verlaufende Rippe ausgebildet, die axial zentriert zu der Felge 5 angeordnet ist und deren Länge kürzer als eine Breite der Felge 5 ist.

Fig. 3 zeigt eine schematische Seitenansicht der in den Fign. 1 und 2 gezeigten Felge 5. Die Verbindungsvorsprünge 8 sind um 40° umfangsversetzt zueinander angeordnet.

Fig. 4 zeigt eine schematische Schnittdarstellung der in Fig. 1 gezeigten Lagerrolle 1 entlang der Schnittebene IV-IV aus Fig. 1. Es ist ein Schnitt der Lagerrolle 1 im Bereich einer Verbindungsaussparung 9 gezeigt, in die ein Verbindungsvorsprung 8 formschlüssig eingreift. Die Verbindungsaussparung 9 als axial verlaufende Nut ausgebildet, die axial zentriert zu dem Reifen 4 angeordnet ist und deren Länge kürzer als eine Breite des Reifens 4 ist.

### Bezugszeichenliste

- 1: Lagerrolle
- 2: Radialwälzlager
- 3: Rollkörper
- 4: Reifen
- 5: Felge
- 6: Mittelabschnitt von 5
- 7: Randabschnitt von 5
- 8: Verbindungsvorsprung
- 9: Verbindungsaussparung

## Patentansprüche

1. Rollkörper (3) für eine Lagerrolle (1) zum Führen und/oder Abstützen eines vorderseitigen oder rückseitigen Abschnitts einer Wäschetrommel eines als Frontlader ausgebildeten Wäschebehandlungsgeräts, aufweisend wenigstens einen in Kontakt mit der Wäschetrommel bringbaren Reifen (4) und wenigstens eine radial innenliegend zu dem Reifen (4) angeordnete Felge (5), **dadurch gekennzeichnet, dass** zwischen dem Reifen (4) und der Felge (5) wenigstens ein in Umfangsrichtung wirkender Formschluss ausgebildet ist, wozu an einer dem Reifen (4) zugewandten Außenmantelfläche der Felge (5) wenigstens ein radial abstehender Verbindungsvorsprung (8) angeordnet ist, der formschlüssig in eine Verbindungsaussparung (9) an einer der Felge (5) zugewandten Innenmantelfläche des Reifens (4) eingreift.

2. Rollkörper (3) nach Anspruch 1, **dadurch gekennzeichnet, dass** der Verbindungsvorsprung (8) als axial verlaufende Rippe ausgebildet ist, die axial zentriert zu der Felge (5) angeordnet ist und deren Länge kürzer als eine Breite der Felge (5) ist, und dass die Verbindungsaussparung (9) als axial verlaufende Nut ausgebildet ist, die axial zentriert zu dem Reifen (4) angeordnet ist und deren Länge kürzer als eine Breite des Reifens (4) ist.

3. Rollkörper (3) nach Anspruch 1 oder 2, **dadurch gekennzeichnet, dass** eine Dicke des Reifens (4) im Bereich der Verbindungsaussparung (9) wenigstens 7,5 mm beträgt und die Dicke des Reifens (4) außerhalb des Bereichs der Verbindungsaussparung (9) wenigstens 9 mm beträgt.

4. Rollkörper (3) nach einem der Ansprüche 1 bis 3, **dadurch gekennzeichnet, dass** eine Höhe des Verbindungsvorsprungs (8) 1,5 mm beträgt.

5. Rollkörper (3) nach einem der Ansprüche 1 bis 4, **dadurch gekennzeichnet, dass** an der Außenmantelfläche der Felge (5) mehrere Verbindungsvorsprünge (8) umfangsversetzt zueinander angeordnet sind und an der Innenmantelfläche des Reifens (4) eine entsprechende Anzahl an Verbindungsaussparungen (9) entsprechend umfangsversetzt zueinander ausgebildet sind.

6. Rollkörper (3) nach einem der Ansprüche 1 bis 5, **dadurch gekennzeichnet, dass** die Felge (5) zumindest teilweise aus faserverstärktem Polybutylenterephthalat hergestellt ist.

7. Rollkörper (3) nach einem der Ansprüche 1 bis 6, **dadurch gekennzeichnet, dass** der Reifen (4) zumindest teilweise aus Polyurethan hergestellt ist.

8. Rollkörper (3) nach einem der Ansprüche 1 bis 7, **dadurch gekennzeichnet, dass** der Reifen (4) eine Shore-Härte von 85 Shore-A aufweist.

9. Rollkörper (3) nach einem der Ansprüche 1 bis 8, **dadurch gekennzeichnet, dass** der Reifen (4) stoffschlüssig mit der Felge (5) verbunden ist.

10. Lagerrolle (1) zum Führen und/oder Abstützen eines vorderseitigen oder rückseitigen Abschnitts einer Wäschetrommel eines als Frontlader ausgebildeten Wäschebehandlungsgeräts, aufweisend wenigstens ein Radialwälzlager (2) und wenigstens einen das Radialwälzlager (2) zumindest teilweise radial außen umschließenden, mit dem Radialwälzlager (2) verbundenen Rollkörper (3), **dadurch gekennzeichnet, dass** der Rollkörper (3) gemäß einem der Ansprüche 1 bis 9 ausgebildet ist.

11. Wäschebehandlungsgerät mit einer um eine waagerechte Achse drehbar gelagerten Wäschetrommel, **gekennzeichnet durch** wenigstens eine Lagerrolle (1) nach Anspruch 10, mit der ein vorderseitiger oder rückseitiger Abschnitt der Wäschetrommel geführt und/oder abgestützt ist.

12. Wäschebehandlungsgerät nach Anspruch 11, **dadurch gekennzeichnet, dass** die Lagerrolle (1) derart relativ zu der Wäschetrommel angeordnet ist, dass die Lagerrolle (1) die Wäschetrommel im Bereich einer vorderseitigen oder rückseitigen Trommelfalz der Wäschetrommel führt und/oder abstützt.

## Claims

1. Rolling body (3) for a bearing roller (1) for guiding and/or supporting a front or rear section of a laundry drum of a laundry treatment appliance embodied as a front loader, having at least one tyre (4) which can be brought in contact with the laundry drum and at least one rim (5) arranged radially internally with respect to the tyre (4), **characterised in that** at least one form fit acting at least in the peripheral direction is embodied between the tyre (4) and the rim (5), for which purpose at least one radially projecting connecting projection (8) is arranged on an outer lateral area of the rim (5) facing the tyre (4), said connecting projection engaging in a form-fit manner in a connecting recess (9) on an inner lateral area of the tyre (4) facing the rim (5).

2. Rolling body (3) according to claim 1, **characterised in that** the connecting projection (8) is embodied as an axially running rib, which is arranged axially centred with respect to the rim (5) and the length of which is shorter than a width of the rim (5), and that the connecting recess (9) is embodied as an axially running groove, which is arranged axially centred with respect to the tyre (4) and the length of which is shorter than a width of the tyre (4).

3. Rolling body (3) according to claim 1 or 2, **characterised in that** a thickness of the tyre (4) in the region of the connecting recess (9) is at least 7.5 mm, and the thickness of the tyre (4) outside of the region of the connecting recess (9) is at least 9 mm.

4. Rolling body (3) according to one of claims 1 to 3, **characterised in that** a height of the connecting projection (8) is 1.5 mm.

5. Rolling body (3) according to one of claims 1 to 4, **characterised in that** a number of connecting projections (8) are arranged offset peripherally with respect to one another on the outer lateral area of the rim (5), and a corresponding number of connecting recesses (9) are embodied accordingly peripherally offset with respect to one another on the inner lateral area of the tyre (4).

6. Rolling body (3) according to one of claims 1 to 5, **characterised in that** the rim (5) is produced at least partially from fibre-reinforced polybutylene terephthalate.

7. Rolling body (3) according to one of claims 1 to 6, **characterised in that** the tyre (4) is produced at least partially from polyurethane.

8. Rolling body (3) according to one of claims 1 to 7, **characterised in that** the tyre (4) has a Shore hardness of 85 Shore A.

9. Rolling body (3) according to one of claims 1 to 8, **characterised in that** the tyre (4) is connected with a material bond to the rim (5).

10. Bearing roller (1) for guiding and/or supporting a front or rear section of a laundry drum of a laundry treatment appliance embodied as a front loader, having at least one radial roller bearing (2) and at least one rolling body (3) at least partially radially externally enclosing the radial roller bearing (2) and connected to the radial roller bearing (2), **characterised in that** the rolling body (3) is embodied according to one of claims 1 to 9.

11. Laundry treatment appliance with a laundry drum mounted rotatably about a horizontal axis, **characterised by** at least one roller bearing (1) according to claim 10, with which a front or rear section of the laundry drum is guided and/or supported.

12. Laundry treatment appliance according to claim 11, **characterised in that** the bearing roller (1) is arranged relative to the laundry drum such that the bearing roller (1) guides and/or supports the laundry drum in the region of a front or rear drum rim of the laundry drum.

## Revendications

1. Corps roulant (3) pour un galet de roulement (1) destiné à la menée et/ou au support d'une section avant ou arrière d'un tambour à linge d'un appareil d'entretien du linge réalisé en tant que chargeur en façade, présentant au moins une roue (4) pouvant être mise en contact avec le tambour à linge et au moins une jante (5) disposée radialement à l'intérieur par rapport à la roue (4), **caractérisé en ce qu'**entre la roue (4) et la jante (5) une forme adaptée est réalisée tendant vers la périphérie, et à cet effet sur une surface de manteau extérieur regardant la roue (4), se trouve au moins une protubérance de raccord (8) se dressant radialement, laquelle s'engage par complémentarité de forme dans un évidement de raccord (9) sur une surface de manteau intérieur de la roue (4) regardant la jante (5).

2. Corps roulant (3) selon la revendication 1, **caractérisé en ce que** la protubérance de raccord (8) est réalisée en tant que nervure passant axialement qui est disposée axialement centrée par rapport à la jante (5) et dont la longueur est plus petite qu'une largeur de la jante (5), et **en ce que** l'évidement de raccord (9) est réalisé en tant que rainure passant axialement, qui est disposée axialement centrée par rapport à la roue (4) et dont la longueur est plus petite qu'une largeur de la roue (4).

3. Corps roulant (3) selon la revendication 1 ou 2, **caractérisé en ce qu'**une épaisseur de la roue (4) fait dans la zone de l'évidement de raccord (9) au moins 7,5 mm et l'épaisseur de la roue (4) fait à l'extérieur de la zone de l'évidement de raccord (9) au moins 9 mm.

4. Corps roulant (3) selon l'une des revendications 1 à 3, **caractérisé en ce qu'**une hauteur de la protubérance de raccord (8) fait 1,5 mm.

5. Corps roulant (3) selon l'une des revendications 1 à 4, **caractérisé en ce que** sur la surface de manteau extérieur de la jante (5) plusieurs protubérances de raccord (8) sont disposées périphériquement décalées et sur la surface de manteau intérieur de la roue (4) un nombre correspondant de protubérances de raccord (9) sont en réponse réalisées périphériquement décalées.

6. Corps roulant (3) selon l'une des revendications 1 à 5, **caractérisé en ce que** la jante (5) est fabriquée au moins partiellement en polybutylène téréphtalate renforcé de fibres.

7. Corps roulant (3) selon l'une des revendications 1 à 6, **caractérisé en ce que** la roue (4) est fabriquée au moins partiellement en polyuréthane.

8. Corps roulant (3) selon l'une des revendications 1 à 7, **caractérisé en ce que** la roue (4) présente une dureté Shore de 85 Shore-A.

9. Corps roulant (3) selon l'une des revendications 1 à 8, **caractérisé en ce que** la roue (4) est raccordée à la jante (5) par complémentarité de matière.

10. Galet de roulement (1) destiné à la menée et/ou au support d'une section avant ou arrière d'un tambour à linge d'un appareil d'entretien du linge réalisé en tant chargeur en façade, présentant au moins un palier à roulement radial (2) et au moins un corps roulant (3) enveloppant radialement vers l'extérieur le palier de roulement radial (2) au moins partiellement et raccordé au palier de roulement radial (2), **caractérisé en ce que** le corps roulant (3) est réalisé selon l'une des revendications 1 à 9.

11. Appareil d'entretien du linge avec un tambour à linge logé rotatif autour d'un axe horizontal, **caractérisé par** au moins un galet de roulement (1) selon la revendication 10, grâce auquel une section avant ou arrière du tambour à linge est menée et/ou est supportée.

12. Appareil d'entretien du linge selon la revendication 11, **caractérisé en ce que** le galet de roulement (1) est disposé par rapport au tambour à linge de façon que le galet de roulement (1) mène et/ou supporte le tambour à linge dans la zone d'un pli de tambour avant ou arrière du tambour à linge.
